# EUROPEAN PATENT APPLICATION

(11) **EP 4 622 069 A1**
(43) Date of publication of application: **24.09.2025**
(21) Application number: 23890354.6
(22) Date of filing: 01.09.2023
(51) Int. Cl.: H02K 5/20, H02K 1/20, H02K 9/193, H02K 5/04, H02K 16/04

(54) **AXIAL MAGNETIC FIELD MOTOR AND COOLING STRUCTURE THEREOF**

(30) Priority: 14.11.2022 CN 202211417521
(71) Applicant: Shanghai Pangood Power Technology Co., Ltd., Shanghai 201615 (CN)
(72) Inventor: CHEN, Jinhua, Shanghai 201615 (CN); TANG, Lei, Shanghai 201615 (CN); YU, Hebo, Shanghai 201615 (CN); HAN, Jun, Shanghai 201615 (CN)
(74) Representative: advotec.
(86) International application number: PCT/CN2023/116394
(87) International publication number: WO 2024/103917

(57) **Abstract**

Provided in the present invention are an axial magnetic field motor and a cooling structure thereof. The cooling structure comprises: a first stator connecting casing which is internally provided a first water inlet channel and a first water outlet channel which are spaced apart from each other; a second stator connecting casing which is internally provided with a second circulation water channel; and a middle casing that encloses to define a stator and rotor accommodation chamber, the two axial sides of the middle casing being respectively connected to the first stator connecting casing and the second stator connecting casing, the middle casing being separately provided with a middle inflow channel and a middle outflow channel, and the second circulation water channel being connected between the middle inflow channel and the middle outflow channel. A water inlet is provided on the first stator connecting casing, and the first water inlet channel is connected between the water inlet and the middle inflow channel. A water outlet is provided on the first stator connecting casing, and the first water outlet channel is connected between the middle outflow channel and the water outlet. The present invention reduces assembly parts, prevents tedious assembling procedures and effectively cools rotors, thereby ensuring the operational reliability and stability of motors.

## Description

### FIELD

The present application relates to the technical field of axial flux motors, and in particular to an axial flux motor and a cooling structure thereof.

### BACKGROUND

Axial flux motors, also known as disc motors, have the advantages of small size, high torque density, high power density and high efficiency, and are widely used in electric vehicles, general industry and other fields. Axial flux motors may be divided into single-stator and single-rotor axial flux motors, single-stator and double-rotor axial flux motors, double-stator and single-rotor axial flux motors, and the like, based on the number of stators and the number of rotors.

Any type of motor may have various losses during operation, which may cause the motor to generate heat. Therefore, it is necessary to design a cooling structure for the motor to improve the operation efficiency of the motor. As an example, a single-stator and double-rotor axial flux motor includes one rotor, two stators and two housings, and one stator is arranged in each of the housings. When the two housings are assembled relative to each other, the rotor is encapsulated in the housings and retained between the two stators. The stators are fixed to bottom plates of the respective housings and in contact with the bottom plates, and therefore, cooling is currently realized by providing a cooling water channel at the bottom plate of the housing and introducing a cooling medium into the cooling water channel.

Each of the housings has the cooling water channel, and each cooling water channel is correspondingly provided with a water inlet and a water outlet. In this way, two water inlets and two water outlets are provided on the single-stator and double-rotor axial flux motor, and the cooling medium is introduced through an external water pipe, which leads to a large number of assembly components and complicated processes, and even leakage at an external joint. The stator can be effectively cooled with the above arrangement of the cooling water channels. An iron core of the rotor is also a heat-generating component, and the rotor is relatively far away from the cooling water channels of the bottom plates on both sides, and thus, the rotor cannot be effectively cooled.

### SUMMARY

In order to solve the above problems, an axial flux motor and a cooling structure thereof are provided according to the present application, which can reasonable utilize housings to realize circulation in cooling water channels on both sides, reduce water inlets and water outlets, avoid complicated processes and effectively cool a rotor.

According to an object of the present application, a cooling structure for an axial flux motor is provided according to the present application, including:
a first stator connecting housing, where a first inlet channel and a first outlet channel are provided inside the first stator connecting housing and are isolated from each other;
a second stator connecting housing, where a second circulating channel is provided inside the second stator connecting housing;
an intermediate housing, where a stator and rotor accommodating cavity is defined by the intermediate housing, two axial sides of the intermediate housing are respectively connected to the first stator connecting housing and the second stator connecting housing, the intermediate housing are provided with an intermediate inlet channel and an intermediate outlet channel, and the second circulating channel is connected between the intermediate inlet channel and the intermediate outlet channel;
a water inlet, which is arranged at the first stator connecting housing, where the first inlet channel is connected between the water inlet and the intermediate inlet channel; and
a water outlet, which is arranged at the first stator connecting housing, where the first outlet channel is connected between the intermediate outlet channel and the water outlet.

In a preferred embodiment, the first stator connecting housing includes a first outer side plate, a first inner side plate, a first outer bottom plate, a first inner bottom plate and two first isolators, the first outer side plate and the first inner side plate are connected between the first outer bottom plate and the first inner bottom plate; the first isolators are connected between the first outer bottom plate and the first inner bottom plate and extend from the first inner side plate to the first outer side plate, to divide an interior of the first stator connecting housing into the first inlet channel and the first outlet channel that are isolated from each other; and
the intermediate housing is connected to the first inner bottom plate, and the first inner bottom plate is provided with a first inner inlet in communication with the first inlet channel and the intermediate inlet channel and a first inner outlet in communication with the intermediate outlet channel and the first outlet channel.

In a preferred embodiment, the water inlet and the water outlet are arranged at the first outer bottom plate.

In a preferred embodiment, the second stator connecting housing includes a second outer side plate, a second inner side plate, a second outer bottom plate, a second inner bottom plate and a second isolator. The second inner side plate and the second outer side plate are connected between the second outer bottom plate and the second inner bottom plate; and
the intermediate housing is connected to the second inner bottom plate, and the second inner bottom plate is provided with a second inner inlet in communication with the intermediate inlet channel and the second circulating channel, and a second inner outlet in communication with the second circulating channel and the intermediate outlet channel; the second isolator is connected between the second outer bottom plate and the second inner bottom plate, and the second isolator extends from the second inner side plate to the second outer side plate and is located between the second inner inlet and the second inner outlet.

In a preferred embodiment, the first outer side plate protrudes outward to form a first protrusion part, and the first inner inlet and the first inner outlet are located at a portion of the first inner bottom plate corresponding to the first protrusion part;
the second outer side plate protrudes outward to form a second protrusion part, and the second inner inlet and the second inner outlet are located at a portion of the second inner bottom plate corresponding to the second protrusion part; and
the intermediate housing protrudes outward to form an intermediate protrusion part, the intermediate inlet channel and the intermediate outlet channel are located in the intermediate protrusion part, and the first protrusion part and the second protrusion part are respectively connected to two axial sides of the intermediate protrusion part and are respectively aligned with the two axial sides of the intermediate protrusion part.

In a preferred embodiment, the cooling structure further includes at least two sealing rings, and the at least two sealing rings are respectively arranged between the first protrusion part and the intermediate protrusion part and between the second protrusion part and the intermediate protrusion part.

In a preferred embodiment, the intermediate protrusion part is provided with a sealing groove in which each of the sealing rings is embedded.

In a preferred embodiment, the first outer side plate protrudes outward to form a set of first connecting lugs, the second outer side plate protrudes outward to form a set of second connecting lugs, and the intermediate housing protrudes outward to form two sets of intermediate connecting lugs; the two sets of intermediate connecting lugs are respectively arranged on the two axial sides of the intermediate housing; the two sets of intermediate connecting lugs are respectively aligned with the set of first connecting lugs and the set of second connecting lugs, and are respectively connected to the set of first connecting lugs and the set of second connecting lugs by fasteners.

In a preferred embodiment, multiple first diverters are provided inside the first stator connecting housing, and are connected to the first inner side plate and/or the first outer side plate; and
multiple second diverters are provided inside the second stator connecting housing, and are connected to the second inner side plate and/or the second outer side plate.

According to another object of the present application, an axial flux motor is further provided according to the present application, including the cooling structure described above. The axial flux motor further includes a first stator, a second stator and a rotor which are arranged in the stator and rotor accommodating cavity. The first stator is connected to the first stator connecting housing, and the second stator is connected to the second stator connecting housing. The rotor is maintained between the first stator and the second stator with an air gap between the rotor and each of the first stator and the second stator.

Compared with the conventional technology, the present technical solutions have the following advantages.

The housings of the axial flux motor is redesigned to be composed of the first stator connecting housing, the second stator connecting housing and the intermediate housing. The intermediate housing is provided with the intermediate inlet channel and the intermediate outlet channel. In this way, circulation is achieved in the channels of the first stator connecting housing and the second stator connecting housing, so that only one water inlet and one water outlet are needed for the cooling structure, thereby reducing assembly components, avoiding complicated assembly processes, and reducing the costs.

Moreover, the intermediate inlet channel and the intermediate outlet channel are provided at the intermediate housing to cool the rotor retained between the two stators, thereby improving the cooling effect and ensuring reliable and stable operation of the motor.

The sealing ring is provided between the intermediate protrusion part and each of the first protrusion part and the second protrusion part to improve the sealing performance.

The present application is further described hereinafter in conjunction with the accompanying drawings and embodiments.

### BRIEF DESCRIPTION OF THE DRAWINGS

FIG. 1 is an exploded view of an axial flux motor according to the present application;
FIG. 2 is a back view of an axial flux motor according to the present application;
FIG. 3 is a front view of an axial flux motor according to the present application;
FIG. 4 is a schematic view showing an outer side of a first stator connecting housing according to the present application;
FIG. 5 is a schematic view showing an inner side of a first stator connecting housing according to the present application;
FIG. 6 is a schematic view showing an interior of a first stator connecting housing according to the present application;
FIG. 7 is a schematic view showing an inner side of a second stator connecting housing according to the present application;
FIG. 8 is a schematic view showing an interior of a second stator connecting housing according to the present application;
FIG. 9 is a schematic view of an intermediate housing according to the present application in one direction; and
FIG. 10 is a schematic view of the intermediate housing according to the present application in another direction.

Reference numerals in the drawings are listed as follows:

| | | | |
|---|---|---|---|
| 100 | cooling structure, | 110 | first stator connecting housing, |
| 1101 | first inlet channel, | 1102 | first outlet channel, |
| 111 | first outer side plate, | 111a | first protrusion part, |
| 111b | first connecting lug, | 112 | first inner side plate, |
| 113 | first outer bottom plate, | 113a | wiring housing, |
| 114 | first inner bottom plate, | 114a | first inner inlet, |
| 114b | first inner outlet, | 115 | first isolator, |
| 116 | first diverter, | 117 | first mounting hole, |
| 120 | second stator connecting housing, | 1201 | second circulating channel, |
| 121 | second outer side plate, | 121a | second protrusion part, |
| 121b | second connecting lug, | 122 | second inner side plate, |
| 123 | second outer bottom plate, | 124 | second inner bottom plate, |
| 124a | second inner inlet, | 124b | second inner outlet, |
| 125 | second isolator, | 126 | second diverter, |
| 127 | second mounting hole, | 130 | intermediate housing, |
| 1300 | stator and rotor accommodating cavity, | | |
| 1301 | intermediate inlet channel, | 1302 | intermediate outlet channel, |
| 131 | intermediate protrusion part, | 131a | sealing groove, |
| 132 | intermediate connecting lug, | 140 | water inlet, |
| 150 | water outlet, | 160 | sealing ring, |
| 170 | fastener, | 180 | motor wiring port, |
| 200 | first stator, | 300 | second stator. |

### DETAILED DESCRIPTION OF THE EMBODIMENTS

The following description is intended to disclose the present application so that those skilled in the art are capable of implementing the present application. Preferred embodiments in the following description are only examples, and those skilled in the art can come up with other obvious variations. The basic principle of the present application defined in the following description may be applied to other implementations, variations, modifications, equivalents and other technical solutions without departing from the spirit and scope of the present application.

### First Embodiment

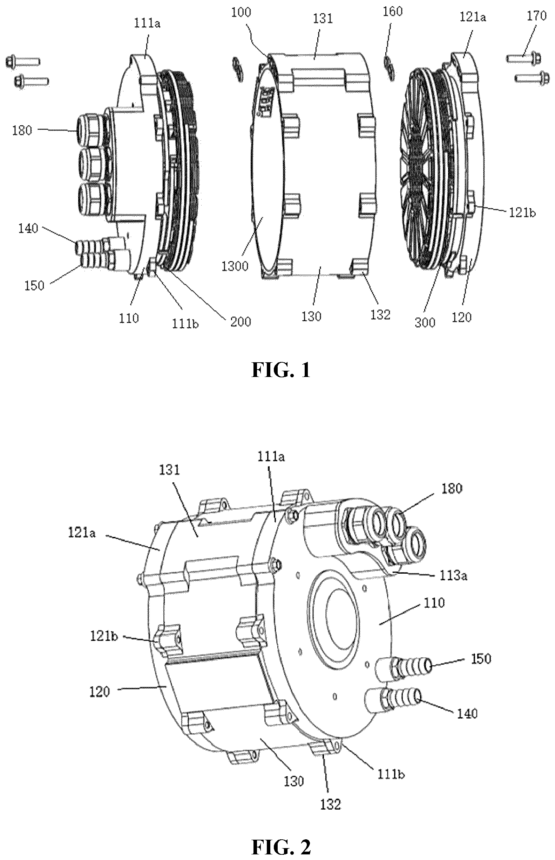

As shown in FIGS. 1 to 10, a cooling structure 100 for an axial flux motor includes:
a first stator connecting housing 110, where a first inlet channel 1101 and a first outlet channel 1102 are provided inside the first stator connecting housing 110 and are isolated from each other;
a second stator connecting housing 120, where a second circulating channel 1201 is provided inside the second stator connecting housing 120;
an intermediate housing 130, where a stator and rotor accommodating cavity 1300 is defined by the intermediate housing 130, two axial sides of the intermediate housing 130 are respectively connected to the first stator connecting housing 110 and the second stator connecting housing 120, the intermediate housing 130 is provided with an intermediate inlet channel 1301 and an intermediate outlet channel 1302, and the second circulating channel 1201 is connected between the intermediate inlet channel 1301 and the intermediate outlet channel 1302;
a water inlet 140, which is arranged at the first stator connecting housing 110, where the first inlet channel 1101 is connected between the water inlet 140 and the intermediate inlet channel 1301; and
a water outlet 150, which is arranged at the first stator connecting housing 110, where the first outlet channel 1102 is connected between the intermediate outlet channel 1302 and the water outlet 150.

The housing of the axial flux motor is redesigned to be composed of the first stator connecting housing 110, the second stator connecting housing 120 and the intermediate housing 130. The intermediate inlet channel 1301 and the intermediate outlet channel 1302 are arranged at the intermediate housing 130. In this way, circulation is achieved in the channels of the first stator connecting housing 110 and the second stator connecting housing 120, so that only one water inlet 140 and one water outlet 150 are needed for the cooling structure 100, thereby reducing assembly components, avoiding complicated assembly processes, and reducing the costs. Moreover, the intermediate housing 130 is provided with the intermediate inlet channel 1301 and the intermediate outlet channel 1302 to shorten the distance between the channels and a rotor, so as to cool the rotor retained between two stators 300, thereby improving the cooling effect and ensuring reliable and stable operation of the motor.

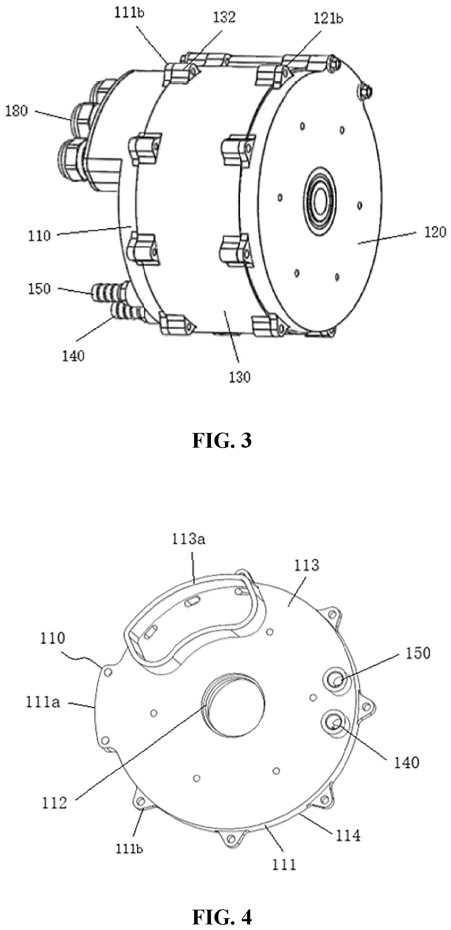

As shown in FIGS. 4 to 6, the first stator connecting housing 110 is disc-shaped, and includes a first outer side plate 111, a first inner side plate 112, a first outer bottom plate 113 and a first inner bottom plate 114. The first outer bottom plate 113 and the first inner bottom plate 114 are substantially annular. The first outer side plate 111 extends and is connected to an outer edge of the first outer bottom plate 113 and an outer edge of the first inner bottom plate 114, and the first inner side plate 112 extends and is connected to an inner edge of the first outer bottom plate 113 and an inner edge of the first inner bottom plate 114.

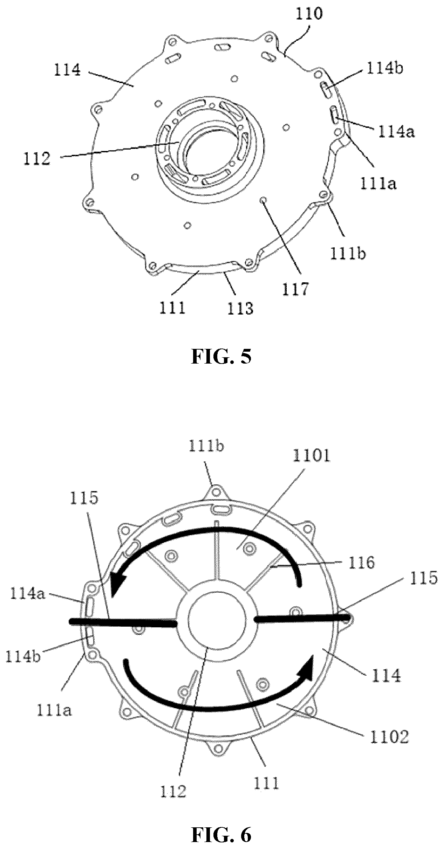

In FIG. 6, the first stator connecting housing 110 further includes two first isolators 115. The first isolators 115 are connected between the first outer bottom plate 113 and the first inner bottom plate 114, and extend from the first inner side plate 112 to the first outer side plate 111, to divide an interior of the first stator connecting housing 110 into the first inlet channel 1101 and the first outlet channel 1102 that are isolated from each other. The two first isolators 115 are located on the same straight line, that is, an angle of an arc of each of the first inlet channel 1101 and the first outlet channel 1102 in a circumferential direction is 180 degrees.

Referring to FIGS. 1 to 6, the intermediate housing 130 is connected to the first inner bottom plate 114, and the first inner bottom plate 114 is provided with a first inner inlet 114a in communication with the first inlet channel 1101 and the intermediate inlet channel 1301 and a first inner outlet 114b in communication with the intermediate outlet channel 1302 and the first outlet channel 1102. Referring to FIG. 4, the water inlet 140 and the water outlet 150 are arranged on the first outer bottom plate 113. It can be seen that, one of the first isolators 115 is located between the first inner inlet 114a and the first inner outlet 114b, and the first isolator 115, the first inner inlet 114a and the first inner outlet 114b are adjacent to each other, which ensures the heat exchange area, and prevents a cooling medium from being discharged directly without uniformly and fully flowing into the first stator connecting housing 110, which affects the cooling effect. The other one of the first isolators 115 is located between the water inlet 140 and the water outlet 150, and similarly, the first isolator 115, the water inlet 140 and the water outlet 150 are adjacent to each other, so as to ensure that the cooling medium can fully fill the interior of the first isolator connecting housing 110.

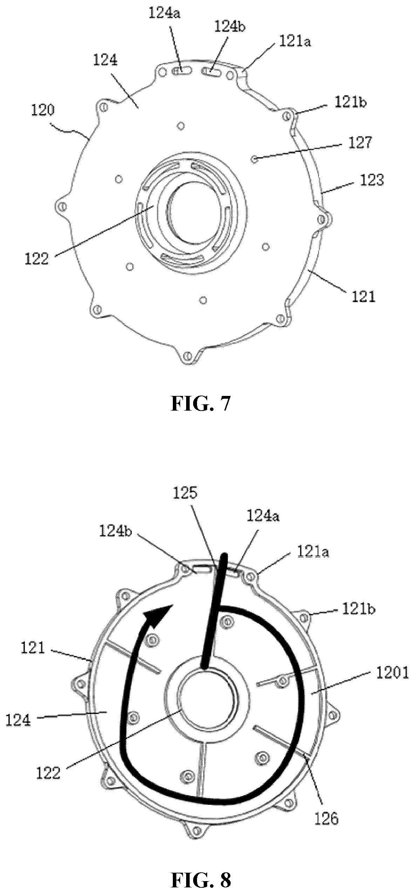

As shown in FIGS. 7 and 8, the second stator connecting housing 120 is disc-shaped, and includes a second outer side plate 121, a second inner side plate 122, a second outer bottom plate 123 and a second inner bottom plate 124. The second outer bottom plate 123 and the second inner bottom plate 124 are annular. The second outer side plate 121 is connected to an outer edge of the second outer bottom plate 123 and an outer edge of the second inner bottom plate 124, and the second inner side plate 122 is connected to an inner edge of the second outer bottom plate 123 and an inner edge of the second inner bottom plate 124.

As shown in FIGS. 1 to 3, 7 and 8, the intermediate housing 130 is connected to the second inner bottom plate 124. The second inner bottom plate 124 is provided with a second inner inlet 124a in communication with the intermediate inlet channel 1301 and the second circulating channel 1201 and a second inner outlet 124b in communication with the second circulating channel 1201 and the intermediate outlet channel 1302.

In FIG. 8, the second stator connecting housing 120 further includes a second isolator 125 which is connected between the second outer bottom plate 123 and the second inner bottom plate 124. The second isolator 125 extends from the second inner side plate 122 to the second outer side plate 121, and is located between the second inner inlet 124a and the second inner outlet 124b. With the second isolator 125, the cooling medium introduced from the second inner inlet 124a is prevented from being directly discharged from the second inner outlet 124b, so the cooling capacity is prevented from being affected due to the reduction of the heat exchange area.

As shown in FIGS. 4 to 10, the cooling medium may be a cooling liquid or a cooling gas, and the cooling liquid includes cooling water or cooling oil. The cooling medium flows in the cooling structure 100 in the following manner.

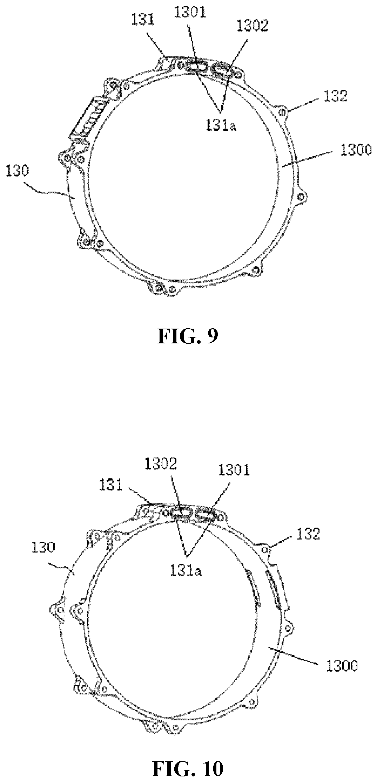

The cooling medium is introduced into the first inlet channel 1101 through the water inlet 140, referring to FIG. 6, and then the cooling medium flows counterclockwise through the first inlet channel 1101. Then, the cooling medium is introduced into the intermediate inlet channel 1301 of the intermediate housing 130 through the first inner inlet 114a, referring to FIG. 9.

The cooling medium in the intermediate inlet channel 1301 is introduced into the second circulating channel 1201 through the second inner inlet 124a, referring to FIG. 8, and then the cooling medium flows counterclockwise through the second circulating channel 1201. Then, the cooling medium is introduced into the intermediate outlet channel 1302 of the intermediate housing 130 through the second inner outlet 124b, referring to FIG. 9.

The cooling medium in the intermediate outlet channel 1302 is introduced into the first outlet channel 1102 through the first inner outlet 114b, referring to FIG. 6, and then the cooling medium flows counterclockwise through the first outlet channel 1102, and is discharged through the water outlet 150.

It can be seen that, the first inlet channel 1101 and the first outlet channel 1102 are isolated from each other along the circumferential direction, and occupy the entire interior of the first stator connecting housing 110. The second circulating channel 1201 is circumferentially arranged inside the second stator connecting housing 120 and occupies the entire interior of the second stator connecting housing 120. The intermediate inlet channel 1301 and the intermediate outlet channel 1302 are arranged axially and run through the intermediate housing 130. Such arrangements ensure the heat exchange area and improve the cooling capacity for the stators and the rotor.

As shown in FIG. 6, multiple first diverters 116 are provided inside the first stator connecting housing 110, and are connected to the first inner side plate 112 and/or the first outer side plate 111. With the first diverters 116, the flow velocity can be increased to improve the cooling capacity. Three first diverters 116 are arranged inside a portion of the first stator connecting housing 110 where the first inlet channel 1101 is located, and the three first diverters 116 are spaced apart from each other along the circumferential direction and are connected to the first inner side plate 112. There is a gap between each of the three first diverters 116 and the first outer side plate 111. In this way, the cooling medium is diverted by the three first diverters 116, and the flow velocity is increased, thereby improving the cooling efficiency. Two first diverters 116 are arranged inside a portion of the first stator connecting housing 110 where the first inlet channel 1102 is located, the two first diverters 116 are spaced apart from each other along the circumferential direction and are connected to the first outer side plate 111, and there is a gap between each of the two first diverters 111 and the first inner side plate 112, so that the cooling medium is diverted and flows through the first outlet channel 1102 at an increased flow velocity, thereby improving the cooling efficiency. The first diverters 111 corresponding to the first inlet channel 1101 are connected to the first inner side plate 112, and the first diverters 111 corresponding to the first outlet channel 1102 are connected to the first outer side plate 111, so that the first stator connecting housing 110 is evenly stressed, thereby ensuring the structural strength.

As shown in FIG. 8, multiple second diverters 126 are provided inside the second stator connecting housing 110, and are connected to the second inner side plate 122 and/or the second outer side plate 121. The multiple second diverters 126 may be spaced apart from each other, and be alternately connected to the second inner side plate 122 and the second outer side plate 121, so that the second stator connecting housing 120 is evenly stressed, and the flow velocity of the cooling medium can be increased, thereby improving the structural strength and the cooling capacity. When the second diverter 126 is connected to the second inner side plate 122, there is a gap between the second diverter 126 and the second outer side plate 121. When the second diverter 126 is connected to the second outer side plate 121, there is a gap between the second diverter 126 and the second inner side plate 122.

The first diverters 116, the second diverters 126, the first isolators 115 and the second isolator 125 may be in a straight line shape. Alternatively, all or part of the first diverters 116 and the second diverters 126 may be Y-shaped.

As shown in FIGS. 1 and 4, the water inlet 140 and the water outlet 150 may be correspondingly provided with joints to be connected to external water pipes for introducing and discharging the cooling medium. The water inlet 140 and the water outlet 150 are retained on the first outer bottom plate 113 of the first stator connecting housing 110, and are adjacent to each other to facilitate wiring and management.

As shown in FIG. 5, the first outer side plate 111 protrudes outward to form a first protrusion part 111a, and the first inner inlet 114a and the first inner outlet 114b are located at a portion of the first inner bottom plate 114 corresponding to the first protrusion part 111a. As shown in FIG. 7, the second outer side plate 121 protrudes outward to form a second protrusion part 121a, and the second inner inlet 124a and the second inner outlet 124b are located at a portion of the second bottom plate 124 corresponding to the second protrusion part 121a. As shown in FIGS. 9 and 10, the intermediate housing 130 protrudes outward to form an intermediate protrusion part 131, and the intermediate inlet channel 1301 and the intermediate outlet channel 1302 are located in the intermediate protrusion part 131. Referring to FIGS. 1 to 3, the first protrusion part 111a and the second protrusion part 121a are respectively connected to two axial sides of the intermediate protrusion part 111a and are respectively aligned with the two axial sides of the intermediate protrusion part 131.

The first protrusion part 111a is configured for the arrangement of the first inner inlet 114a and the first inner outlet 114b, so that the arrangement of the stator on the first stator connecting housing 110 is not affected. The stator is connected to the first inner side plate 112. The radial dimension of the first protrusion part 111a only needs to meet the requirements of the arrangement of the first inner inlet 114a and the first inner outlet 114b, thereby avoiding the increase of the size. Similarly, the second protrusion part 121a is configured for the arrangement of the second inner inlet 124a and the second inner outlet 124b, so as not to affect the connection between the stator and the second inner side plate 122. Similarly, the intermediate protrusion part 131 is configured for arranging the intermediate outlet channel 1302 in the intermediate protrusion part 131, so as not to affect the arrangement of the rotor and the stators in the stator and rotor accommodating cavity 1300.

In addition, after the first stator connecting housing 110, the second stator connecting housing 110 and the intermediate housing 130 are assembled, the peripheries of the three are aligned with each other to avoid the increase of the occupied space and affecting the applicability. Further, the number of the water inlet 140 and the number of the water outlet 150 are reduced, which is also beneficial to miniaturization. The intermediate housing 130, the first stator connecting housing 110 and the second stator connecting housing 110 have the same shape, and are annular, so that the assembled axial flux motor is annular. Alternatively, the first stator connecting housing 110, the second stator connecting housing 110 and the intermediate housing 130 may be square or in other shapes, which is not limited herein.

As shown in FIGS. 1, 4, 7 and 9, the first outer side plate 111 protrudes outward to form a set of first connecting lugs 111b, the second outer side plate 121 protrudes outward to form a set of second connecting lugs 121b, and the intermediate housing 130 protrudes outward to form two sets of intermediate connecting lugs 132. The two sets of intermediate connecting lugs 132 are respectively arranged on the two axial sides of the intermediate housing 130. The two sets of intermediate connecting lugs 132 are respectively aligned with the set of first connecting lugs 111b and the set of second connecting lugs 121b, and are respectively connected to the set of first connecting lugs 111b and the set of second connecting lugs 121b by fasteners 170. Each set of intermediate connecting lugs 132 includes multiple intermediate connecting lugs 132 which are circumferentially arranged and spaced apart from each other. Similarly, the set of second connecting lugs 121b includes multiple second connecting lugs 121b that are circumferentially arranged and spaced apart from each other, and the set of first connecting lugs 111b includes multiple first connecting lugs 111b that are circumferentially arranged and spaced apart from each other. This arrangement makes the connections uniform and ensures the connection strength.

As shown in FIG. 1, the cooling structure 100 for an axial flux motor further includes at least two sealing rings 160 which are respectively arranged between the first protrusion part 111a and the intermediate protrusion part 131 and between the second protrusion part 121a and the intermediate protrusion part 131. As an example, the sealing ring 160 is arranged between the first inner inlet 114a and the intermediate inlet channel 1301, the sealing ring 160 is annular and surrounds the first inner inlet 114a and the intermediate inlet channel 1301, so as to ensure the sealing of the connection between the first inner inlet 114a and the intermediate inlet channel 1301, and effectively prevent leakage. The sealing ring 160 is also correspondingly arranged between the first inner outlet 114b and the intermediate outlet channel 1302. The sealing rings 160 corresponding to the first inner inlet 114a and the first inner outlet 114b may be connected as a whole, thereby effectively improving the mounting efficiency.

Preferably, the intermediate protrusion part 160 is provided with a sealing groove 131a in which the sealing ring 160 is embedded. This ensures that there is no gap between the intermediate housing 130 and each of the first stator connecting housing 110 and the second stator connecting housing 120, thereby improving the sealing performance.

In summary, the housing of the axial flux motor is redesigned to be composed of the first stator connecting housing 110, the second stator connecting housing 120 and the intermediate housing 130. The intermediate inlet channel 1301 and the intermediate outlet channel 1302 are arranged at the intermediate housing 130. In this way, circulation is achieved in the channels of the first stator connecting housing 110 and the second stator connecting housing 120, so that only one water inlet 140 and one water outlet 150 are needed for the cooling structure 100, thereby reducing assembly components, avoiding complicated assembly processes, and reducing costs. Moreover, the intermediate inlet channel 1301 and the intermediate outlet channel 1302 are provided on the intermediate housing 130 to cool the rotor retained between the two stators 300, thereby improving the cooling effect and ensuring reliable and stable operation of the motor. The sealing ring 160 is provided between the intermediate protrusion part 131 and each of the first protrusion part 111a and the second protrusion part 121a to improving the sealing performance.

### Second Embodiment

As shown in FIG. 1, an axial flux motor is further provided, including the cooling structure 100 described above. The axial flux motor 100 further includes a first stator 200, a second stator 300 and a rotor which are arranged inside the stator and rotor accommodating cavity. The first stator 200 is connected to the first stator connecting housing 110, and the second stator 300 is connected to the second stator connecting housing 120. The rotor is maintained between the first stator 110 and the second stator 120, and an air gap is provided between the rotor and each of the first stator 110 and the second stator 120.

Since the axial flux motor includes the cooling structure 100 described above, the beneficial effects of the axial flux motor can refer to that of the cooling structure 100 described above.

As shown in FIGS. 1 and 5 , the first stator 200 is connected to the first inner bottom plate 114 of the first stator connecting housing 110, and exchanges heat through the first inlet channel 1101 and the first outlet channel 1102 inside the first stator connecting housing 110. The first stator connecting housing 110 is provided with multiple first mounting holes 117. When the first stator 200 is connected to the first inner bottom plate 114, fasteners are passed through the first mounting holes 117 to be secured to the first stator 200. The first mounting holes 117 may be countersunk holes.

Similarly, referring to FIGS. 1 and 7, the second stator 200 is connected to the second inner bottom plate 124 of the second stator connecting housing 120, and exchanges heat through the second circulating channel 1201 inside the second stator connecting housing 120. The second stator connecting housing 120 is provided with multiple second mounting holes 127 for securing the second stator 120 by fasteners.

As shown in FIGS. 1, 5 and 7, the axial flux motor further includes an output shaft which passes through centers of the first stator connecting housing 110, the intermediate housing 130 and the second stator connecting housing 120 in sequence, and the rotor is fixed to the output shaft. The rotor is cooled by the intermediate inlet channel 1301 and the intermediate outlet channel 1302 of the intermediate housing 130. A bearing is provided between the output shaft and each of the first stator connecting housing 110 and the second stator connecting housing 120. As shown in FIGS. 5 and 7, an inner periphery of the first inner side plate 112 of the first stator connecting housing 110 is provided with a step, and an inner periphery of the second inner side plate 122 of the second stator connecting housing 120 is provided with a step, and the steps are used to fix the bearings.

As shown in FIGS. 1 to 4, in addition to the water inlet 140 and the water outlet 150 arranged on the first outer bottom plate 113 of the first stator connecting housing 11, the first outer bottom plate 113 is further provided a motor wiring port 180 for connecting a controller and the like. The water inlet 140, the water outlet 150 and the motor wiring port 180 are arranged on the first outer bottom plate 113, thereby facilitating wiring and management. Specifically, the first outer bottom plate 113 protrudes outward to form a wiring housing 113a. The wiring housing 113a is arranged along an edge of the first outer bottom plate 113, and is located within an area defined by the edge of the first outer bottom plate 113. The motor wiring port 180 is arranged on the wiring housing 113a, and three motor wiring ports 180 are provided and spaced apart from each other along the circumferential direction. In this way, the motor wiring ports 180 are arranged within the area defined by the edge of the first outer bottom plate 113, so as to prevent the increase of the radial dimension and affecting the installation adaptability.

A method for assembling the axial flux motor is described as follows.

The first stator 200 is connected to the first inner bottom plate 114 of the first stator connecting housing 110, and the second stator 300 is connected to the second inner bottom plate 124 of the second stator connecting housing 120.

The intermediate housing 130 is connected between the first inner bottom plate 114 of the first stator connecting housing 110 and the second inner bottom plate 124 of the second stator connecting housing 120, so that the first stator 200, the second stator 300, and the rotor located between the first stator 200 and the second stator 300 are retained in the stator and rotor accommodating cavity 1300 of the intermediate housing 130.

Each of the first stator connecting housing 110, the second stator connecting housing 120 and the intermediate housing 130 may be integrally formed by injection molding to achieve manufacturability and convenient and quick assembly. The sealing ring 160 may be further provided for sealing. Referring to FIG. 1, for example, the sealing ring 160 is provided between the intermediate protrusion part 131 and each of the first protrusion part 111a and the second protrusion part 121a.

The above embodiments are only used to illustrate the technical ideas and features of the present application, and are intended to enable those skilled in the art to understand the contents of the present application and implement the present application based thereon. The patent scope of the present application is not limited to these embodiments. Any equivalent variation or modification made based on the spirit disclosed in the present application is deemed to fall into the patent scope of the present application.

## Claims

1. A cooling structure (100) for an axial flux motor, comprising:
a first stator connecting housing (110), wherein a first inlet channel (1101) and a first outlet channel (1102) are provided inside the first stator connecting housing (110) and are isolated from each other;
a second stator connecting housing (120), wherein a second circulating channel (1201) is provided inside the second stator connecting housing (120);
an intermediate housing (130), wherein a stator and rotor accommodating cavity (1300) is defined by the intermediate housing (130), two axial sides of the intermediate housing (130) are respectively connected to the first stator connecting housing (110) and the second stator connecting housing (120), the intermediate housing (130) is provided with an intermediate inlet channel (1301) and an intermediate outlet channel (1302), and the second circulating channel (1201) is connected between the intermediate inlet channel (1301) and the intermediate outlet channel (1302);
a water inlet (140), which is arranged at the first stator connecting housing (110), wherein the first inlet channel (1101) is connected between the water inlet (140) and the intermediate inlet channel (1301); and
a water outlet (150), which is arranged at the first stator connecting housing (110), wherein the first outlet channel (1102) is connected between the intermediate outlet channel (1302) and the water outlet (150).

2. The cooling structure (100) for an axial flux motor according to claim 1, wherein
the first stator connecting housing (110) comprises a first outer side plate (111), a first inner side plate (112), a first outer bottom plate (113), a first inner bottom plate (114) and two first isolators (115), and the first outer side plate (111) and the first inner side plate (112) are connected between the first outer bottom plate (113) and the first inner bottom plate (114);
the two first isolators (115) are connected between the first outer bottom plate (113) and the first inner bottom plate (114) and extend from the first inner side plate (112) to the first outer side plate (111), to divide an interior of the first stator connecting housing (110) into the first inlet channel (1101) and the first outlet channel (1102) that are isolated from each other; and
the intermediate housing (130) is connected to the first inner bottom plate (114), and the first inner bottom plate (114) is provided with a first inner inlet (114a) in communication with the first inlet channel (1101) and the intermediate inlet channel (1301), and a first inner outlet (114b) in communication with the intermediate outlet channel (1302) and the first outlet channel (1102).

3. The cooling structure (100) for an axial flux motor according to claim 2, wherein the water inlet (140) and the water outlet (150) are arranged at the first outer bottom plate (113).

4. The cooling structure (100) for an axial flux motor according to claim 2, wherein
the second stator connecting housing (120) comprises a second outer side plate (121), a second inner side plate (122), a second outer bottom plate (123), a second inner bottom plate (124) and a second isolator (125), and the second inner side plate (122) and the second outer side plate (121) are connected between the second outer bottom plate (123) and the second inner bottom plate (124);
the intermediate housing (130) is connected to the second inner bottom plate (124), and the second inner bottom plate (124) is provided with a second inner inlet (124a) in communication with the intermediate inlet channel (1301) and the second circulating channel (1201), and a second inner outlet (124b) in communication with the second circulating channel (1201) and the intermediate outlet channel (1302); and
the second isolator (125) is connected between the second outer bottom plate (123) and the second inner bottom plate (124), and the second isolator (125) extends from the second inner side plate (122) to the second outer side plate (121) and is located between the second inner inlet (124a) and the second inner outlet (124b).

5. The cooling structure (100) for an axial flux motor according to claim 4, wherein
the first outer side plate (111) protrudes outward to form a first protrusion part (111a), and the first inner inlet (114a) and the first inner outlet (114b) are located at a portion of the first inner bottom plate (114) corresponding to the first protrusion part (111a);
the second outer side plate (121) protrudes outward to form a second protrusion part (121a), and the second inner inlet (124a) and the second inner outlet (124b) are located at a portion of the second inner bottom plate (124) corresponding to the second protrusion part (121a); and
the intermediate housing (130) protrudes outward to form an intermediate protrusion part (131), the intermediate inlet channel (1301) and the intermediate outlet channel (1302) are located in the intermediate protrusion part (131), and the first protrusion part (111a) and the second protrusion part (121a) are respectively connected to two axial sides of the intermediate protrusion part (131) and are respectively aligned with the two axial sides of the intermediate protrusion part (131).

6. The cooling structure (100) for an axial flux motor according to claim 5, further comprising at least two sealing rings (160), wherein the at least two sealing rings (160) are respectively arranged between the first protrusion part (111a) and the intermediate protrusion part (131) and between the second protrusion part (121a) and the intermediate protrusion part (131).

7. The cooling structure (100) for an axial flux motor according to claim 6, wherein the intermediate protrusion part (160) is provided with a sealing groove (131a) in which each of the sealing rings (160) is embedded.

8. The cooling structure (100) for an axial flux motor according to claim 4, wherein
the first outer side plate (111) protrudes outward to form a set of first connecting lugs (111b), the second outer side plate (121) protrudes outward to form a set of second connecting lugs (121b), and the intermediate housing (130) protrudes outward to form two sets of intermediate connecting lugs (132); and
the two sets of intermediate connecting lugs (132) are respectively arranged on the two axial sides of the intermediate housing (130), and the two sets of intermediate connecting lugs (132) are respectively aligned with the set of first connecting lugs (111b) and the set of second connecting lugs (121b), and are respectively connected to the set of first connecting lugs (111b) and the set of second connecting lugs (121b) by fasteners (170).

9. The cooling structure (100) for an axial flux motor according to claim 4, wherein
a plurality of first diverters (116) are provided inside the first stator connecting housing (110), and are connected to the first inner side plate (112) and/or the first outer side plate (111); and
a plurality of second diverters (126) are provided inside the second stator connecting housing (110), and are connected to the second inner side plate (122) and/or the second outer side plate (121).

10. An axial flux motor, comprising
the cooling structure (100) according to any one of claims 1 to 9; wherein
the axial flux motor (100) further comprises a first stator (200), a second stator (300) and a rotor which are arranged in the stator and rotor accommodating cavity, the first stator (200) is connected to the first stator connecting housing (110), the second stator (300) is connected to the second stator connecting housing (120), and the rotor is maintained between the first stator (110) and the second stator (120) with an air gap between the rotor and each of the first stator (110) and the second stator (120).
